# EUROPÄISCHE PATENTSCHRIFT

(11) **EP 3 006 652 B1**
(45) Veröffentlichungstag und Bekanntmachung des Hinweises auf die Patenterteilung: **22.11.2017**
(21) Anmeldenummer: 15186496.4
(22) Anmeldetag: 23.09.2015
(51) Int. Cl.: E05B 17/22, E05B 47/06

(54) **SCHLOSS MIT DRÜCKERKONTAKT**
LOCK WITH PUSH-BUTTON CONTACT
SERRURE DOTÉE DE CONTACT DE LOQUET

(30) Priorität: 08.10.2014 DE 102014220412
(43) Veröffentlichungstag der Anmeldung: 13.04.2016
(73) Patentinhaber: dormakaba Deutschland GmbH, 58256 Ennepetal (DE)
(72) Erfinder: SCHNEIDER, Marc-André, 58256 Ennepetal (DE); GRÖNE, Kai, 58256 Ennepetal (DE)
(74) Vertreter: Balder IP Law, S.L.

(56) Entgegenhaltungen:
- CA-A1- 2 297 333
- DE-A1-102010 009 557
- DE-B3-102010 028 651

## Beschreibung

Die vorliegende Erfindung betrifft ein Schloss nach dem Oberbegriff von Anspruch 1 sowie ein Zugangskontrollverfahren für eine Tür mit einem Schloss nach Anspruch 9, mit dem erfindungsgemäßen Schloss.
Die DE10 2010 009 557 A1 offenbart ein Schloss mit einer dreigeteilten Nuss, die drei Scheiben aufweist. Je eine der äußeren Scheiben kann über einen Mitnehmer mit der mittleren Scheibe gekuppelt werden. Das Schloss weist weiterhin ein Mikroschalter mit einer Schalterfahne auf, welche durch Schwenken der mittleren Scheibe betätigt wird. Gattungsbildende Schlösser sind zumeist mit einem Riegel und einer Falle ausgestattet, die zusammen mit anderen mechanischen und elektronischen Funktionselementen des Schlosses in einem Schlosskasten angeordnet sind. In üblicher Weise können die Falle und auch der Riegel durch einen Innentürdrücker, der sich innerhalb des Gebäudes in der Nuss oder Drückernuss beispielsweise eines Panikschlosses befindet, gemeinsam entriegelt werden. An der Außenseite der Tür, d. h. außerhalb des Gebäudes oder des nur mit Zugangsberechtigung zu betretenden Bereiches, kann ohne zuvorige Zugangsberechtigung über den Außentürdrücker der Riegel und gegebenenfalls auch die Falle nicht entriegelt werden, da die Nuss ausgekuppelt ist und die Drehbewegung des Außentürdrückers nicht auf die Nuss übertragen wird. In diesem Auskupplungszustand der Nuss befindet sich die Nuss mit einem Sensor, der üblicherweise ein Mikroschalter mit einer Schalterfahne ist, in einer Kontaktstellung. Erfolgt beispielsweise über einen Chip oder eine Karte oder über ein anderes Zutrittskontroll- bzw. Zugangsberechtigungssystem die Freigabe zum Begehen der Tür, wird an eine elektromechanische Zuschalteinheit die Nuss in einen Kupplungszustand überführt, in dem die Drehbewegung des Außentürdrückers auf die Nuss übertragen wird.

Mit Betätigung des Drückers wird dabei die Nuss mitbewegt und gibt den Sensor in eine Freigabestellung frei. In der Freigabestellung sendet der Sensor ein Signal an das Zugangsberechtigungssystem, wodurch geprüft werden kann, ob das Begehen der Tür rechtmäßig erfolgt ist, nämlich im Kupplungszustand der Nuss, der eine Drehbewegung des Außentürdrückers auf die Nuss erlaubt. Damit sich der Innentürdrücker und/oder eine Panikstange in Fluchtrichtung, d. h. aus dem Gebäude heraus, immer in einem eingekuppelten Zustand befindet und sich der Außentürdrücker bei unberechtigten Zutritt in einem Auskupplungszustand befindet, bzw. nach Berechtigung beispielsweise über ein Zutrittskontrollsystem einkuppelbar ist, ist es bekannt, die Nuss in eine obere und eine untere Nusshälfte mit einem dazwischen liegenden Nussmittenteil auszubilden. Dabei ist die Nusshälfte, die mit dem sich innerhalb des Gebäudes angeordneten Innentürdrücker und/oder Panikstange verbunden ist, immer in Kupplungsstellung mit dem Nussmittelteil. Zumindest auf die mit dem an der Außenseite der Tür befestigten Außentürdrückers verbundene Nusshälfte ist in üblicherweise eine Sperrscheibe aufgesetzt, die eine manuelle Voreinstellung des Schlosses bezgl. der Außen- bzw. Innentürseite ermöglicht. Zudem kann über Zuschalthebel eine elektromechanische Zuschalteinheit aktiviert werden, wodurch eine Umstellung zwischen dem Auskupplungszustand in dem Kupplungszustand erfolgt.

Nachteilhaft bei den bekannten Schlössern ist, dass diese bezüglich ihrer Ausrichtung, d. h. die Seite der Fluchtrichtung und die Seite der Zutrittsberechtigung festgelegt sind, da die Positionierung des als Mikroschalter ausgestalteten Drückerkontaktes durch Einkleben des Mikroschalters festgelegt wird. Dadurch ist ein nachträgliches Umrüsten der bekannten Schlösser nicht möglich. Zudem ist bei den bekannten Schlössern nachteilig, dass die Schalterfahne des als Drückerkontaktes ausgeschalteten Mikroschalters nachgebogen werden muss, um eine definierte Schaltreihenfolge sicherzustellen, was ein mehrfaches Nachbiegen der Schalterfahne notwendig macht, was zu einer Materialermüdung der Schalterfahne und evtl. einer Funktionslosigkeit des Mikroschalters führt. Zudem ist es bei den bekannten Schlössern nicht möglich, die Schalterfahne bzw. ein Justieren im zusammengebauten und/oder bereits montierten Zustand des Schlosses erfolgen kann.
Es ist daher die Aufgabe der vorliegenden Erfindung, die aus dem Stand der Technik bekannten Nachteile zu überwinden. Insbesondere ist es die Aufgabe der vorliegenden Erfindung ein Schloss mit einem Drückerkontakt zur Verfügung zu stellen, welches variabel beidseitig einsetzbar ist, und bei dem die Einstellung der Schaltreihenfolge vereinfacht ist, welche vorzugsweise auch im zusammengebauten Zustand des Schlosses erfolgen kann.

Die voranstehende Aufgabe wird durch ein Schloss mit den Merkmalen des Anspruches 1 und durch ein Verfahren mit den Merkmalen des Anspruches 9 gelöst. Weitere Vorteile, Merkmale und Details der Erfindung ergeben sich aus den Unteransprüchen, der Beschreibung und den Zeichnungen. Dabei gelten Merkmale und Details, die im Zusammenhang mit dem erfindungsgemäßen Schloss beschrieben sind, selbstverständlich auch mit dem erfindungsgemäßen Zugangskontrollverfahren für eine Tür mit einem Schloss und jeweils umgekehrt, sodass bzgl. der Offenbarung zu den einzelnen Erfindungsaspekten stets wechselseitig Bezug genommen wird, bzw. werden kann.
Das erfindungsgemäße Schloss mit einem Drücker und/oder einer Panikstange, der oder die mit einer ein- und auskuppelbaren Nuss wirkverbunden ist, mit einer elektromechanischen Zuschalteinheit und zumindest einem Sensor für die Zugangskontrolle einer Tür, wobei in einem ausgekuppelten Zustand der Nuss, die Nuss mit dem Sensor in einer Kontaktstellung ist und wobei durch Ansteuerung der elektromechanischen Zuschalteinheit die Nuss in einen Kupplungszustand überführbar ist, wobei in dem Kupplungszustand durch Betätigung des Drückers und/oder der Panikstange die Nuss den Sensor in eine Freigabestellung freigibt, schließt die technische Lehre ein, dass die Nuss einen Arm mit einem drehbar gelagerten Betätigungselement umfasst, wobei in dem Kupplungszustand durch Betätigung des Drückers und/oder der Panikstange das Betätigungselement den Sensor aus der Kontaktstellung in die Freigabestellung freigibt.

Diese Lösung bietet den Vorteil, dass durch das zusätzliche an dem Arm der Nuss ausgestaltete Betätigungselement, welches drehbar in den Arm gelagert ist, und welches den Sensor aus der Kontaktstellung in die Freigabestellung freigibt, über das in dem Arm der Nuss drehbar gelagerte Betätigungselement, die Einstellung der Schaltreihenfolge durch Drehung des Betätigungselementes relativ zum Arm der Nuss, d. h. durch Einstellung am Betätigungselement vereinfacht ist. Zudem erlaubt die zusätzliche Rotationsbewegung des Betätigungselementes ergänzend zu der Rotationsbewegung des Armes der Nuss einen größeren Toleranzausgleich, um die Betätigung, d. h. die Schaltreihenfolge des bevorzugt als Mikroschalter ausgestalteten Sensors einzustellen.

Grundsätzlich ist es auch denkbar, dass über das Betätigungselement der Sensor, und dabei besonders bevorzugt der als Mikroschalter ausgestaltete Sensor betätigt wird, d. h. dieser beispielsweise ein- und ausgeschaltet wird. Dabei kann der Mikroschalter beispielsweise in der Kontaktstellung und/oder in der Freigabestellung betätigt werden. Gemäß der Erfindung umfasst das Betätigungselement einen Stift, der eine Schalterfahne des als Mikroschalter ausgestalteten Sensors kontaktiert bzw. freigibt. Um die Einstellmöglichkeiten zwischen dem Betätigungselement und dem Sensor noch zu erhöhen, ist dabei der Stift vorteilhaft exzentrisch an dem Betätigungselement ausgestaltet. Da das Betätigungselement drehgelagert an dem Arm der Nuss angeordnet ist, kann die Anzahl der möglichen Positionen des Stiftes, der an dem Betätigungselement angeordnet ist, durch dessen exzentrische Anordnung an dem Betätigungselement wesentlich erhöht werden. Dadurch kann erfindungsgemäß durch Drehen des Betätigungselementes eine sehr dezidierte Feinjustierung der Schaltreihenfolge des erfindungsgemäßen Schlosses erfolgen. Dabei ist im Entkupplungszustand der Nuss vorgesehen, dass der Stift die Schalterfahne des als Mikroschalters ausgestalteten Sensors derart kontaktiert, dass in der Grundstellung der Mikroschalter betätigt ist, d. h. die Schalterfahne gedrückt ist. Um die bei der Herstellung der Schlösser auftretenden Toleranzen ausgleichen zu können, ist erfindungsgemäß erkannt worden, dass bei Entkupplungsstellung der Nuss der im Bereich des als Mikroschalter ausgestalteten Sensors positionierte Arm über das an dem Arm ausgestaltete und drehbar gelagerte Betätigungselement an die Lage des als Mikroschalter ausgestalteten Sensors angepasst werden kann, sodass trotz der auftretenden Toleranzen die Grundstellung des Mikroschalters, nämlich die Betätigung der Schalterfahne immer einstellbar, bzw. immer gewährleistet ist. Diese Ausgestaltung des Betätigungselements an dem Arm der Nuss macht ein Nachbiegen der Schalterfahne überflüssig. Ist beispielsweise der an dem Betätigungselement ausgestaltete Stift in der Auskupplungsstellung der Nuss zu weit von der Schalterfahne des Mikroschalters entfernt, sodass der Drückerkontakt nicht betätigt ist, kann durch einfaches Drehen des Betätigungselementes und hierbei durch Drehen des exzentrisch an dem Betätigungselement angeordneten Stiftes der Stift an die Schalterfahne des Mikroschalters soweit heran geführt werden, dass die Grundstellung, nämlich der Schaltpunkt des Mikroschalters in der Grundstellung einstellbar ist.

In Vorteilhafterweise erfolgt die Einstellung des Betätigungselementes an der dem Stift gegenüberliegenden Seite an dem Betätigungselement. Dazu kann in vorteilhafterweise das Betätigungselement eine Aufnahme für ein Werkzeug aufweisen, beispielsweise einen Schlitz, einen Kreuzschlitz oder eine äquivalente Aussparung, welche die Aufnahme eines Werkzeuges erlaubt, um beispielsweise über einen Schraubenzieher betätigt werden zu können. In besonders bevorzugter Weise kann bei dem erfindungsgemäßen Schloss gegenüber den aus dem Stand der Technik bekannten Schlösser eine Einstellung des Betätigungselementes im geschlossenen Zustand des Schlosses, d. h. bei einem zusammengebauten Schloss erfolgen.

In bevorzugter Weise besteht die Nuss des erfindungsgemäßen Schlosses aus zwei Nusshälften und einem Mittenteil, wobei in bevorzugter Weise der Arm, an dem das Betätigungselement angeordnet ist, an dem Mittenteil der Nuss ausgestaltet ist bzw. mit dem Mittenteil der Nuss in Wirkverbindung steht. Über die zwei Nusshälften und über die auf die Nusshälften aufsetzbaren Sperrscheiben kann dabei in bevorzugter Weise die die Ausrichtung des Schlosses zur Flucht- und zur Sicherungsseite festgelegt werden. Wird beispielsweise über die elektromechanische Zuschalteinheit, die auch als elektromagnetische Zuschalteinheit oder als Elektromotor verstanden werden kann, die entkuppelte Nusshälfte in einen Kupplungszustand überführt, wird bei Betätigung des Drückers und/oder der Panikstange im Kupplungszustand das Nussmittenteil und der an dem Mittenteil ausgestaltete Arm mit dem daran angeordneten Betätigungselement mitbewegt. Dabei erfolgt bevorzugt bei Betätigung des Drückers und/oder der Panikstange eine rotatorische Bewegung der Nuss und damit auch eine rotatorische Bewegung des Armes, der am Mittenteil der Nuss ausgebildet ist. Bei der Drehbewegung des Mittenteils wird der mit dem Mittenteil verbundene Arm von dem Sensor, d. h. hier bevorzugt von dem Mikroschalter weggeführt. Dabei wird natürlich auch das an dem Arm angeordnete Betätigungselement und der mit dem Betätigungselement verbundene Stift, der in der Grundstellung die Schalterfahne des als Mikroschalter ausgestalteten Sensors betätigt, von der Schalterfahne weggeführt. Dabei gibt der Stift den Sensor, d. h. hier insbesondere die Schalterfahne des als Mikroschalter ausgestalteten Sensors frei. Aufgrund der Freigabe des Sensors durch das Betätigungselement, d. h. hier in vorteilhafter Weise durch aus der Kontaktbringung des Stiftes mit der Schalterfahne des Mikroschalters kann über die Freigabestellung des Sensors geprüft werden, ob die Tür rechtmäßig, d. h. in eingekuppeltem Zustand der Nuss nach Zugangsberechtigung durch Betätigung des Türdrückers erfolgt ist. Das Signal des Sensors kann dabei an das Zutrittskontrollsystem oder an andere Überwachungssysteme weitergeleitet werden. Natürlich kann die Nuss auch einteilig ausgestaltet sein, wobei dann vorzugsweise auf der Zugangsseite der Tür ein Knauf angeordnet ist, der eine Begehung der Tür unmöglich macht, und auf der Panikseite der Tür ein Innentürdrücker oder eine Panikstange angeordnet ist, um die Tür im Panikfall bedienen, d. h. öffnen zu können.
Das erfindungsgemäße Zugangskontrollverfahren für eine Tür mit einem erfindungsgemäßen Schloss, welches einen Drücker und/oder eine Panikstange, eine Nuss, eine elektromechanische Zuschalteinheit und einen Sensor umfasst, sieht vor, dass in einem Schließzustand der Tür die Nuss mit dem Sensor in einer Kontaktstellung ist, wobei zum Öffnen der Tür nach Zugangsberechtigungsabfrage über ein Zugangskontrollsystem die Nuss durch die elektromechanische Zuschalteinheit in einen Kupplungszustand überführt wird und durch Betätigung des Drückers und/oder der Panikstange die Nuss den Sensor in eine Freigabestellung freigibt, in der von dem Sensor ein Signal zum erlaubten Begehen der Tür insbesondere an das Zugangskontrollsystem übertragen wird.

Um hier Wiederholungen bzgl. der Vorteile des erfindungsgemäßen Verfahrens zu vermeiden, wird auf die Beschreibung der vorteilhaften Ausgestaltung des erfindungsgemäßen Schlosses verwiesen und es wird vollumfänglich auf diese zurückgegriffen.

Weitere, die Erfindung verbessernde Maßnahmen werden nachstehend mit der Beschreibung eines bevorzugten Ausführungsbeispiels der Erfindung anhand der Figuren näher dargestellt. Dabei ist zu beachten, dass die Figuren nur beschreibenden Charakter haben und nicht dazu gedacht sind, die Erfindung in irgendeiner Form einzuschränken.
Es zeigen:
- Fig. 1: einen Ausschnitt eines erfindungsgemäßen Schlosses in einer Grundstellung, bei der ein als Mikroschalter ausgestalteter Sensor, in Kontaktstellung mit dem Betätigungselement ist,
- Fig. 2: zeigt das Schloss aus Figur 1 in Freigabestellung des Sensors von dem Betätigungselement und
- Fig. 3: zeigt einen Ausschnitt der Rückseite der in der Figur 1 und 2 dargestellten Detailansicht des Schlosses.

In den unterschiedlichen Figuren sind gleiche Teile stets mit denselben Bezugszeichen versehen, weshalb diese in der Regel nur einmal beschrieben werden.

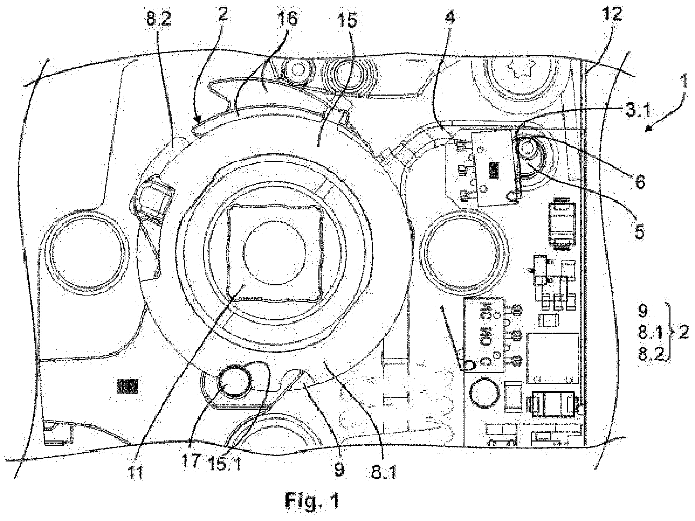

Figur 1 zeigt in einem Ausschnitt ein erfindungsgemäßes Schloss 1, wobei bevorzugt die für die vorliegende Erfindung relevanten Funktionselemente des Schlosses 1 bezeichnet sind. Die Einschränkung auf die erfindungswesentlichen Funktionselemente bzw. Merkmale des Schlosses soll jedoch nicht beschränkend auf die Funktionsweise des Schlosses 1 gelten. Sämtliche Funktionselemente des Schlosses 1 sind in einem Schlosskasten 12 angeordnet, der in eine Tür einsetzbar ist.

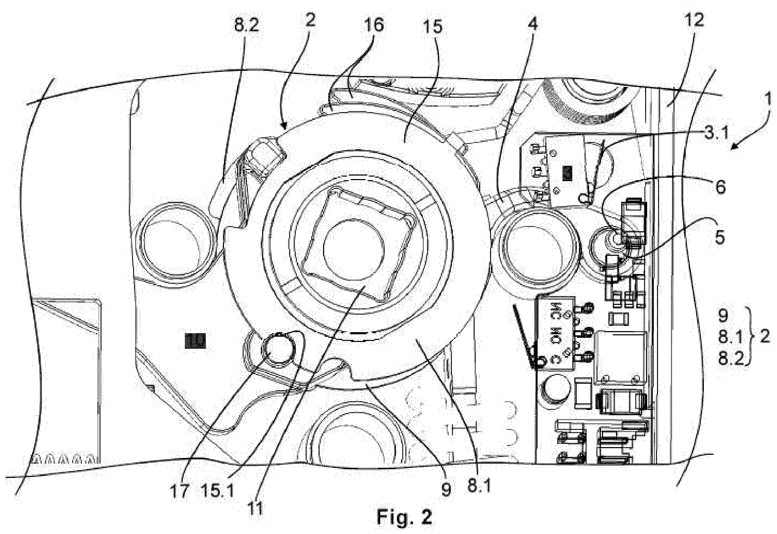

Das Schloss 1 weist eine ein- und auskuppelbare Nuss 2 auf, die über eine Klinkenaufnahme 11 mit einem hier nicht dargestellten Türdrücker wirkverbunden ist. Vorliegend umfasst die Nuss 2 eine vordere Nusshälfte 8.1 und eine hintere Nusshälfte 8.2 und ein Nussmittenteil 9. Über eine elektromechanische Zuschalteinheit (hier nicht dargestellt) ist die Nuss 2 bei positiver Berechtigungs- oder Zutrittsanfrage an ein Zugangskontroll- oder -berechtigungssystem, beispielsweise über einen Chip oder eine Karte, einkuppelbar. Im Einkupplungszustand der Nuss 2 greift dazu ein Arretiermittel 17 in die Ausnehmung 15.1 der Sperrscheibe 15. Zudem weist das erfindungsgemäße Schloss einen Sensor 3 auf, der vorliegend als Mikroschalter mit einer Schalterfahne 3.1 ausgestaltet ist. Vorliegend ist die Schalterfahne 3.1 des als Mikroschalter ausgestalteten Sensors 3 in einer Kontaktstellung. In einer Freigabestellung, die in der folgenden Figur 2 dargestellt ist, ist die Schalterfahne 3.1 des als Mikroschalter ausgestalteten Sensors 3 in einer Freigabestellung. In der Freigabestellung überträgt der als Sensor 3 ausgestaltete Mikroschalter ein Signal, beispielsweise an das Zugangsberechtigungssystem, wodurch ein rechtmäßiges Begehen der Tür im Kupplungszustand der Nuss 2 geprüft werden kann. Um den als Sensor 3 ausgestalteten Mikroschalter, nämlich hier die Schalterfahne 3.1 des Sensors 3 in eine Kontaktstellung zu halten, bzw. aus der Kontaktstellung in eine Freigabestellung freizugeben, ist an einem Arm 4, der an der Nuss 2 ausgebildet ist, ein Betätigungselement 5 drehbar gelagert an dem freien Ende des Arms 4 angeordnet. Vorliegend umfasst das Betätigungselement 5 einen an dem Betätigungselement 5 ausgebildeten Stift 6, der exzentrisch am Betätigungselement 5 angeordnet ist. Vorliegend ist der Stift 6 derart mit dem Betätigungselement 5 ausgerichtet, dass der Stift 6 die Schalterfahne 3.1 des als Sensor 3 ausgestalteten Mikroschalters in einer Kontaktstellung, d. h. in einer Druckstellung hält. Der Arm 4, an dem das Betätigungselement 5 angeordnet ist, ist wie dargestellt am Nussmittenteil 9 der Nuss 2 ausgestaltet. Zur Orientierung der Lage des Arms 4 ist vorliegend der Betätigungsarm 10 bezeichnet, der bevorzugt einteilig mit dem Nussmittenteil 9 ausgeführt ist, und der sich von der Klinkenaufnahme 11 weg erstreckt. Der Betätigungsarm 10 dient üblicherweise dazu, um eine Schlossmechanik zu aktivieren. So kann beispielsweise ein Riegel in den Schlosskasten 12 des Schlosses 1 zurückgezogen werden oder es kann sogar eine Falle 13 oder eine Kreuzfalle 14 durch die Aktivierung der Schließmechanik bewegt werden. Zusätzlich, und der Orientierung dienlich, sind am Nussmittenteil 9 der Nuss 2 Zuschalthebel 16 ausgestaltet. Die Zusatzhebel 16 sind gelenkig am Nussmittenteil 9 angeordnet, und können sich zwischen einer Eingriffsstellung und einer Freigabestellung bewegen. Sind die Zuschalthebel 16 wie vorliegend in der Figur 1 dargestellt, in eine Freigabestellung gebracht, wird eine Drehübertragung auf die Klinkenaufnahme 11, d. h. auf das Nussmittenteil 9 unterbrochen. In diesem Zustand befindet sich die Nuss 2 in einem Auskupplungszustand, bei der eine Drehbewegung des Drückers über die Klinkenaufnahme 11 nicht auf die Nuss 2 übertragen wird. Somit ist im Auskupplungszustand der Nuss 2 auch nicht der am Nussmittenteil 9 ausgestaltete Arm 4 mit dem daran angeordneten Betätigungselement 5 bewegbar.

Den Zuschalthebeln 16 sind Sperrscheiben zugeordnet, wobei hier nur die vordere Sperrscheibe 15 erkennbar ist, die drehbar auf die vordere Nusshälfte 8.1 der Nuss 2 aufgesetzt ist. Die Sperrscheibe 15 ist dabei so einstellbar, dass diese die Zuschalthebel 16 in die Eingriffsstellung bringt, bzw. die zugeordneten Zuschalthebel 16 in die Freigabestellung überführt. Durch in Eingriffbringen des Arretiermittels 17 in die Ausnehmung 15.1 der Sperrscheibe 15 und durch Einwirken der Sperrscheibe 15 auf die Zuschalthebel 16 kann der Kupplungszustand der Nuss 2 hergestellt werden, d. h. in vorteilhafter Weise die Drehbewegung des Außentürdrückers über die Klinkenaufnahme 11 auf das Nussmittenteil 9 übertragen werden.

Durch Mitführen des Nussmittenteils 9 bei Drehbewegung des Türdrückers im Kupplungszustand der Nuss 2 wird auch der an dem Nussmittenteil ausgestaltete Arm 4 und das an dem Arm 4 drehbar angeordnete Betätigungselement 5 mitbewegt. Durch die Mitbewegung des Nussmittenteils 9 der Nuss 2 über die Drehbewegung des Türdrückers gibt das Betätigungselement 5 so den als Mikroschalter ausgestalteten Sensor 3 in eine Freigabestellung frei, indem der an dem Betätigungselement 5 angeordnete Stift 6 aus der Kontaktstellung mit der Schalterfahne 3.1 des als Mikroschalter ausgestalteten Sensors 3 in eine Freigabestellung der Schalterfahne 3.1 bewegt wird.

Figur 2 zeigt den als Mikroschalter ausgestalteten Sensor 3 in der von dem Betätigungselement 5 freigegebenen Freigabestellung. Wie zu erkennen ist, ist durch Herunterführen des Arms 4 bei eingekuppelter Nuss 2, nämlich durch Mitführen des Nussmittenteils 9 durch die von dem Türdrücker auf die Nuss 2 übertragene Drehbewegung, der Arm 4 und das an dem Arm 5 ausgestaltete Betätigungselement 5 in Richtung der Drehbewegung mitgeführt worden, in der Figur im Uhrzeigersinn, sodass der Stift 6, der an dem Betätigungselement 5 ausgestaltet ist, außerhalb der in der Figur 1 dargestellten Kontaktstellung von der Schalterfahne 3.1 liegt. Durch die Drehbewegung, die über den Türdrücker und über die Klinkenaufnahme 11 auf die Nuss 2 übertragen wird, ist auch der Betätigungsarm 10, der mit dem Nussmittelteil 9 einstückig ausgestaltet ist, mitgeführt worden. Entsprechend wird bei Übertragung der Drehbewegung von dem Türdrücker auf die Nuss 2 über den Betätigungsarm 10 die Schlossmechanik des Türschlosses 2 betätigt und gleichzeitig dazu überträgt der als Mikroschalter ausgestaltete Sensor 3 in der Freigabestellung ein Signal, beispielsweise an das Zugangskontrollberechtigungssystem, wodurch das rechtmäßige Begehen der Tür bei eingekuppelter Nuss 2 und/oder die Funktion der Schlossmechanik überprüft werden kann.

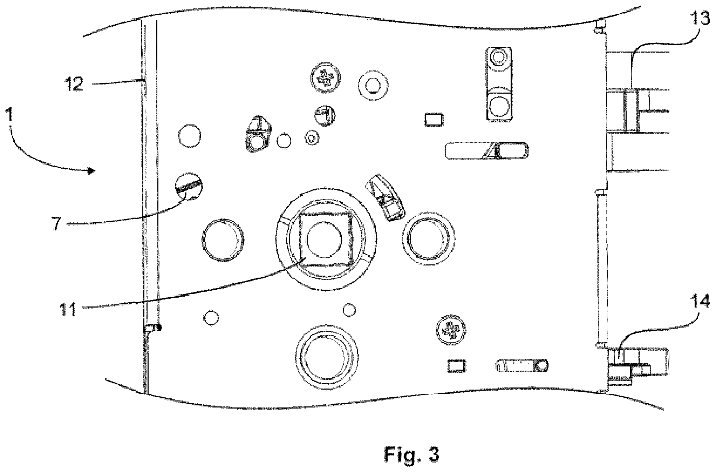

Figur 3 zeigt einen Ausschnitt der Rückseite des Schlosskastens 12, der das erfindungsgemäße Schloss 1 aufnimmt. Die Fallen 13 und 14 sind an der rechten Seite des Schlosskastens 12 zu erkennen. Die in den Figuren 1 und 2 gezeigte Vorderseite des Schlosses und die in der Figur 3 dargestellte Rückseite des Schlosses können frei wählbar entweder zur Gebäudeinnenseite, d. h. im Sicherungsbereich eines Gebäudes als auch an der Gebäudeaußenseite, nämlich auf der Seite des Zugangskontrollsystems angeordnet werden. Je nachdem, wie das Schloss 1 angeordnet ist, kann über die Sperrscheibe 15, die auf die vordere Hälfte 8.1 der Nuss 2 aufgesetzt ist, der dauerhafte Kupplungszustand für den Innentürdrücker, nämlich auf der Fluchtseite eingestellt werden. Wie zu erkennen ist, ist das Betätigungselement 5 über das Einstellelement 7 einstellbar. Vorliegend ist das Einstellelement 7 als ein in dem Betätigungselement 5 ausgestalteter Schlitz zur Aufnahme eines Schraubenziehers ausgestaltet. Natürlich kann das Einstellelement auch andersartig ausgestaltet sein, nämlich beispielsweise in Form eines Kreuzschlitzes, eines Innensechskants oder als sternförmige Aufnahme, um eine Bedienung mit einem dafür entsprechend ausgestalteten Werkzeug zu erlauben, insbesondere das Einstellelement 7 mit dem Betätigungselement 5 zu drehen. Durch Drehung des Betätigungselementes 5 über das Einstellelement 7 wird der an dem Betätigungselement 5 exzentrisch angeordnete Stift 6 entlang der Kreisbahn des Betätigungselementes 5 bewegt, wodurch mittels des Werkzeuges die Signalfolge leicht einstellbar ist, bzw. auch nachträglich umstellbar ist. Zudem macht die Einstellbarkeit des Betätigungselementes 5 eine einfache Nachjustierbarkeit des Stiftes 6, nämlich dessen Kontaktlage an der Schalterfahne 3.1 möglich, bzw. ermöglicht eine sehr einfache Nachjustierbarkeit auch im geschlossenen Zustand des Schlosses, d. h. bei einem zusammengebauten Schloss. Da vorliegend das Betätigungselement 5 nur mit dem Nussmittenteil 9 wirkverbunden ist, kann auch nur der eingekuppelte Zustand der Nuss 2, nämlich die Übertragung der Drehbewegung des Türdrückers über die Klinkenaufnahme 11 auf die Nuss 2 abgefragt.

Die durch die Ansprüche definierte Erfindung beschränkt sich in ihrer Ausführung nicht auf das vorhergehend angegebene bevorzugte Ausführungsbeispiel bzw. auf das vorhergehend angegeben Verfahren. Vielmehr ist eine Anzahl von Varianten denkbar, welche von der dargestellten Lösung auch bei grundsätzlich anders gearteten Ausführungen Gebraucht macht.

### Bezugszeichenliste

- 1: Schloss
- 2: Nuss / Drückernuss
- 3: Sensor / Mikroschalter
- 3.1: Schalterfahne zu 3
- 4: Arm
- 5: Betätigungselement zu 4
- 6: Stift zu 5
- 7: Einstellelement für 5 und 6
- 8.1: Nusshälfte zu 2
- 8.2: Nusshälfte zu 2
- 9: Nussmittenteil
- 10: Betätigungsarm
- 11: Klinkenaufnahme
- 12: Schlosskasten
- 13: Falle
- 14: Kreuzfalle
- 15: Sperrscheibe
- 15.1: Ausnehmung in 15 für 17
- 16: Zuschalthebel
- 17: Arretiermittel

## Patentansprüche

1. Schloss (1) mit einem Drücker und/oder einer Panikstange, der oder die mit einer ein- und auskuppelbaren Nuss (2) wirkverbunden ist, mit einer elektromechanischen Zuschalteinheit und zumindest einem Sensor (3) für die Zugangskontrolle einer Tür, wobei in einem ausgekuppelten Zustand der Nuss (2), die Nuss (2) mit dem Sensor (3) in einer Kontaktstellung ist, und wobei durch Ansteuerung der elektromechanischen Zuschalteinheit die Nuss (2) in einen Kupplungszustand überführbar ist, wobei in dem Kupplungszustand durch Betätigung des Drückers und/oder der Panikstange die Nuss (2) den Sensor (3) in eine Freigabestellung freigibt,
**dadurch gekennzeichnet,**
**dass** die Nuss (2) einen Arm (4) mit einem drehbar gelagerten Betätigungselement (5) umfasst, wobei in dem Kupplungszustand durch Betätigung des Drückers und/oder der Panikstange das Betätigungselement (5) den Sensor (3) aus der Kontaktstellung in die Freigabestellung freigibt, wobei das Betätigungselement (5) einen Stift (6) umfasst, der exzentrisch an dem Betätigungselement (5) angeordnet ist.

2. Schloss (1) nach Anspruch 1,
**dadurch gekennzeichnet,**
**dass** das Betätigungselement (5) über den Stift (6) den Sensor (3) kontaktiert und/oder freigibt.

3. Schloss (1) nach Anspruch 1 oder 2,
**dadurch gekennzeichnet,**
**dass** der Stift (6) einstellbar ist.

4. Schloss (1) nach Anspruch 3,
**dadurch gekennzeichnet,**
**dass** über die Einstellung des Stiftes (6) die Signalfolge und/oder der Schaltpunkt des Sensors (3) einstellbar ist.

5. Schloss (1) nach einem der vorhergehenden Ansprüche,
**dadurch gekennzeichnet,**
**dass** die Einstellung des Stiftes (6) an einem Einstellelement (7) an der dem Stift (6) gegenüberliegenden Seite des Betätigungselements (5) erfolgt.

6. Schloss (1) nach einem der vorhergehenden Ansprüche,
**dadurch gekennzeichnet,**
**dass** die Nuss (2) zwei Hälften (8.1, 8.2) und ein Mittenteil (9) umfasst.

7. Schloss (1) nach Anspruch 6,
**dadurch gekennzeichnet,**
**dass** der Arm (4) mit dem Betätigungselement (5) an dem Mittenteil (9) angeordnet ist.

8. Schloss (1) nach Anspruch 6 oder 7,
**dadurch gekennzeichnet,**
**dass** im Kupplungszustand der Nuss (2) das Nussmittenteil (9) bei Betätigung des Drückers und/oder der Panikstange mitführbar ist.

9. Zugangskontrollverfahren für eine Tür mit einem Schloss (1) nach einem der Ansprüche 1 bis 8, umfassend einen Drücker und/oder eine Panikstange, eine Nuss (2), eine elektromechanische Zuschalteinheit und einen Sensor (3), wobei in einem Schließzustand der Tür die Nuss (2) mit dem Sensor (3) in einer Kontaktstellung ist, wobei zum Öffnen der Tür nach Zugangsberechtigungsabfrage über ein Zugangskontrollsystem die Nuss (2) durch die elektromechanische Zuschalteinheit in einen Kupplungszustand überführt wird und durch Betätigung des Drückers und/oder der Panikstange die Nuss (2) den Sensor (3) in eine Freigabestellung freigibt, in der von dem Sensor (3) ein Signal zum erlaubten Begehen der Tür insbesondere an das Zugangskontrollsystem übertragen wird.

## Claims

1. A lock (1), including a knob and/or an anti-panic bar, which are/is operatively connected to a follower (2), which may be coupled or uncoupled, with an electro-mechanical switch-on unit and at least one sensor (3) for the access control of a door, wherein, in an uncoupled condition of the follower (2), the follower (2) is in a contact position with the sensor (3), wherein, by controlling the electro-mechanical switch-on unit, the follower (2) may be transferred into a coupling condition, wherein in the coupling condition, by actuating the knob and/or the anti-panic bar, the follower (2) releases the sensor (3) into a release position,
**characterized in**
**that** the follower (2) comprises an arm (4) with a rotatably supported actuating element (5), wherein in the coupling condition, by actuating the knob and/or the anti-panic bar, the actuating element (5) released the sensor (3) from the contact position into the release position, wherein the actuating element (5) comprises a pin (6) which is disposed eccentrically at the actuating element (5).

2. The lock (1) according to claim 1,
**characterized in**
**that** the actuating element (5) contacts and/or released the sensor (3) via the pin (6).

3. The lock (1) according to claim 1 or 2,
**characterized in**
**that** the pin (6) is adjustable.

4. The lock (1) according to claim 3,
**characterized in**
**that** the signal sequence and/or the switching point of the sensor (3) is adjustable via the adjustment of the pin (6).

5. The lock (1) according to any of the preceding claims,
**characterized in**
**that** the adjustment of the pin (6) is realized at an adjusting element (7) at the side of the actuating element (5) opposite the pin (6).

6. The lock (1) according to any of the preceding claims,
**characterized in**
**that** the follower (2) has two halves (8.1, 8.2) and a central part (9).

7. The lock (1) according to claim 6,
**characterized in**
**that** the arm (4) with the actuating element (5) is disposed at the central part (9).

8. The lock (1) according to claim 6 or 7,
**characterized in**
**that**, in the coupling condition of the follower (2), upon actuation of the knob and/or of the anti-panic bar, the central follower part (9) is guided along.

9. An access control method for a door with a lock (1) according to any of the claims 1 to 8, comprising a knob and/or an anti-panic bar, a follower (2), an electro mechanical switch-on unit, and a sensor (3), wherein, in a locking condition of the door, the follower (2) is in a contact position with the sensor (3), wherein, for opening the door following an access authorisation query via an access control system, the follower (2) is transferred into a coupling condition by means of the electro-mechanical switch-on unit, and by actuating the knob and/or the anti-panic bar, the follower (2) releases the sensor (3) into a release position, in which a signal for allowing the passage of a door is in particular transferred by the sensor (3) to the access control system.

## Revendications

1. Serrure (1) avec une poignée et/ou une barre anti-panique, lesquelles sont connectées/laquelle est connectée de façon opérationnelle avec un fouillot (2) qui peut être accouplé et désaccouplé, avec une unité de mise en circuit électromécanique et avec au moins un capteur (3) pour le contrôle d'accès d'une porte, dans laquelle, dans un état désaccouplé du fouillot (2), le fouillot (2) est en une position de contact avec le capteur (3), et dans laquelle, par excitation de l'unité de mise en circuit électromécanique, le fouillot (2) est transférable en un état d'accouplement, dans l'état d'accouplement, par l'intermédiaire de l'actionnement de la poignée et/ou de la barre anti-panique, le fouillot (2) relâchant le capteur (3) vers une position de relâchement,
**caractérisée en ce**
**que** le fouillot (2) comporte un bras (4) avec un élément d'actionnement (5) supporté de façon rotative, dans l'état d'accouplement, par l'intermédiaire de l'actionnement de la poignée et/ou de la barre anti-panique, l'élément d'actionnement (5) relâchant le capteur (3) depuis la position de contact vers la position de relâchement, l'élément d'actionnement (5) comportant une cheville (6), laquelle est agencée de façon excentrique sur l'élément d'actionnement (5).

2. Serrure (1) selon la revendication 1,
**caractérisée en ce**
**que** l'élément d'actionnement (5) contacte et/ou relâche le capteur (3) via la cheville (6).

3. Serrure (1) selon la revendication 1 ou 2,
**caractérisée en ce**
**que** la cheville (6) est ajustable.

4. Serrure (1) selon la revendication 3,
**caractérisée en ce**
**que** la séquence de signaux et/ou le point de commutation du capteur (3) sont ajustables/est ajustable via l'ajustage de la cheville (6).

5. Serrure (1) selon l'une des revendications précédentes,
**caractérisée en ce**
**que** l'ajustage de la cheville (6) s'effectue sur un élément d'ajustage (7) sur la face de l'élément d'actionnement (5) opposée à la cheville (6).

6. Serrure (1) selon l'une des revendications précédentes,
**caractérisée en ce**
**que** le fouillot (2) comporte deux moitiés (8.1, 8.2) et une partie centrale (9).

7. Serrure (1) selon la revendication 6,
**caractérisée en ce**
**que** le bras (4) est agencé avec l'élément d'actionnement (5) sur la partie centrale (9).

8. Serrure (1) selon la revendication 6 ou 7,
**caractérisée en ce**
**que** dans l'état d'accouplement du fouillot (2), lors de l'actionnement de la poignée et/ou de la barre anti-panique, la partie centrale de fouillot (9) peut être amenée en guidage.

9. Procédé de contrôle d'accès pour une porte avec une serrure (1) selon l'une des revendications 1 à 8, comportant une poignée et/ou une barre anti-panique, un fouillot (2), une unité de mise en circuit électromécanique et un capteur (3), dans lequel, dans un état de fermeture de la porte, le fouillot (2) est en une position de contact avec le capteur (3), dans lequel pour l'ouverture de la porte après une interrogation d'autorisation d'accès par l'intermédiaire d'un système de contrôle d'accès, le fouillot (2) est transféré par l'unité de mise en circuit électromécanique en un état d'accouplement, et par actionnement de la poignée et/ou la barre anti-panique, le fouillot (2) relâche le capteur (3) vers une position de relâchement, dans laquelle le capteur (3) transmet un signal pour le passage autorisé de la porte, tout particulièrement au système de contrôle d'accès.
